# EUROPEAN PATENT SPECIFICATION

(11) **EP 4 002 025 B1**
(45) Date of publication and mention of the grant of the patent: **26.02.2025**
(21) Application number: 21207089.0
(22) Date of filing: 09.11.2021
(51) Int. Cl.: G05B 19/042

(54) **SYSTEM COMPRISING AN INTERFACE APPARATUS, CORRESPONING METHOD AND PROGRAM**
SYSTEM MIT EINER SCHNITTSTELLENVORRICHTUNG SOWIE ENTSPRECHENDES VERFAHREN UND PROGRAMM
SYSTÈME AVEC UN APPAREIL D'INTERFACE, PROCÉDÉ ET PROGRAMME CORRESPONDANTS

(30) Priority: 16.11.2020 JP 2020190061
(43) Date of publication of application: 25.05.2022
(73) Proprietor: YOKOGAWA ELECTRIC CORPORATION, Musashino-shi, Tokyo 180-8750 (JP)
(72) Inventor: OKAMOTO, Hiromi, Musashino-shi, Tokyo 180-8750 (JP); FUJII, Hideyuki, Musashino-shi, Tokyo 180-8750 (JP); KATAYAMA, Hirotaka, Musashino-shi, Tokyo 180-8750 (JP)
(74) Representative: Winter, Brandl - Partnerschaft mbB

(56) References cited:
- EP-A1- 3 324 579
- DE-A1- 102016 111 358
- US-A1- 2020 192 319

## Description

### BACKGROUND

### 1. TECHNICAL FIELD

The present invention relates to a system comprising an interface apparatus, an interface method, and an interface program.

### 2. RELATED ART

Patent document 1 describes "a diagnosis apparatus 100 configured to generate an analysis model for diagnosing an abnormal operation of a facility 10 based on detection signals of a plurality of sensors 20 and learn the analysis model to improve an accuracy of the diagnosis".

Patent document 2 discloses a gateway device comprising a control system interface component that is operable to provide a bidirectional communication between at least one external control system and said gateway device, a field device interface component, a direct data channel that is operable to exchange data between the control system interface component and the field device interface component, a communication interface component that is operable to provide a bidirectional communication between at least one external communication device and said gateway device.

Patent document 3 discloses a drive control system for controlling and regulating electric machines and drives, comprising power control electronics for providing a power control for drives, motors, actuators, and/or sensors of machine hardware. According to the invention, the drive control system comprises at least one control/interface unit for M2M protocol-based communication with the power control, wherein the power control has an M2M-protocol interface for bidirectional communication with the interface unit.

Patent document 4 discloses an apparatus includes at least one processor and memory storing instructions that, when executed, cause the at least one processor to determine a process control context based on a request for information associated with a field device of a process control system, the process control context based on a configuration of the process control system, identify a topic included in the request, the topic corresponding to the field device based on the process control context, map the topic to an action to be executed by the field device, generate a command to direct the field device to execute the action based on the mapping, and transmit the command to the field device to execute the action.

### [Citation list]

### [Patent document]

Patent document 1: Japanese Unexamined Patent Application, Publication No. 2019-101495
Patent document 2: European Patent Application Publication No. EP 3324579A1
Patent document 3: German Patent Application Publication No. DE 102016111358A1
Patent document 4: US Patent Application Publication No. US 2020192319A1

### [General disclosure]

The invention is defined by the features of the independent claims. The dependent claims are directed to preferred embodiments of the invention. According to a first aspect, there is provided a system as defined in claim 1.

The cloud communication unit may receive a third command using the protocol of the first form from the first cloud platform and convert the third command into a fourth command using the protocol of the common form, and the interface unit may transmit the fourth command to the AI processing unit.

The first command may include a sensor list acquisition request command for requesting to acquire a list of sensors provided in the facility managed by the first cloud platform.

The first command may include a sensor data acquisition request command for requesting to acquire measurement data of a sensor provided in the facility managed by the first cloud platform.

The first command may include a model information change request command for requesting to change information of the model managed by the first cloud platform.

The first command may include a configuration information change request command for requesting to change configuration information managed by the first cloud platform.

The interface apparatus does further include the AI processing unit.

According to a second aspect, there is provided an interface method as defined in claim 10.

According to a third aspect, there is provided an interface program as defined in claim 11.

The summary clause does not necessarily describe all necessary features of the embodiments of the present invention.

### BRIEF DESCRIPTION OF THE DRAWINGS

Fig. 1 illustrates one example of a block diagram of an interface apparatus 100 according to the present embodiment together with a facility 10 and a cloud platform 50.
Fig. 2 illustrates one example of a generation flow of a learning model using the interface apparatus 100 according to the present embodiment.
Fig. 3 illustrates one example of a determination flow by the learning model using the interface apparatus 100 according to the present embodiment.
Fig. 4 illustrates one example of a flow for updating the learning model from an external system 300 using the interface apparatus 100 according to the present embodiment.
Fig. 5 illustrates another example of the flow for updating the learning model from the external system 300 using the interface apparatus 100 according to the present embodiment.
Fig. 6 illustrates an example of a computer 9900 in which a plurality of modes of the present invention may be entirely or partially embodied.

### DESCRIPTION OF EXEMPLARY EMBODIMENTS

Hereinafter, the present invention will be described by way of embodiments of the invention, but the following embodiments are not intended to limit the invention according to the claims. In addition, not all combinations of features described in the embodiments necessarily have to be essential to solving means of the invention.

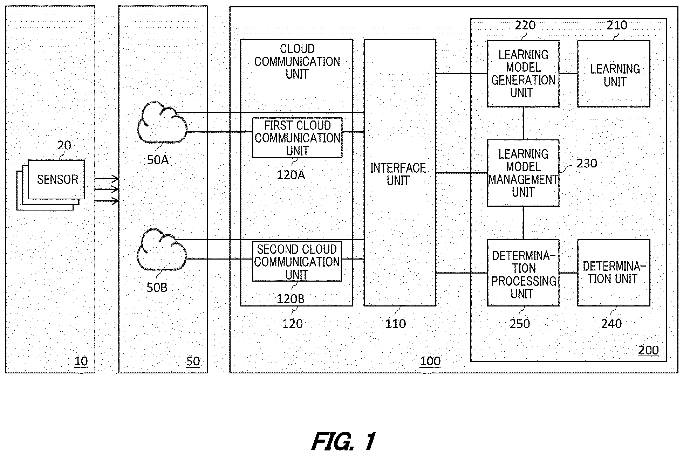

Fig. 1 illustrates one example of a block diagram of an interface apparatus 100 according to the present embodiment together with a facility 10 and a cloud platform 50. The interface apparatus 100 according to the present embodiment provides a function unit configured to execute artificial intelligence (AI) processing related to a state determination (for example, an abnormality diagnosis) of the facility 10, and an interface for the cloud platform 50 configured to manage the facility 10. At this time, the interface apparatus 100 is configured to receive a command using a protocol of a common form that is not dependent on the cloud platform 50 from the function unit configured to execute the AI processing.
Then, the interface apparatus 100 is configured to convert the command using the protocol of the common form into a command using a protocol of a specific form dependent on any cloud platform, and transmit the converted command to any cloud platform.

The facility 10 is a structure set as a target of the state determination by the function unit configured to execute the AI processing. The facility 10 may be, for example, a plant. Examples of such a plant may include not only chemical or other industrial plants but also a plant that manages and controls a well source such as a gas field or an oil field and its surrounding area, a plant that manages and controls power generation such as hydroelectric, thermal, or nuclear power generation, a plant that manages and controls environmental power generation such as solar or wind power generation, a plant that manages and controls water and sewerage, a dam, or the like, or other plants. However, the plant is not limited to this. The facility 10 may be any structure different from the plant. One or a plurality of sensors 20 are provided in the facility 10.

The sensor 20 is configured to measure a target physical quantity. For example, the sensor 20 may be a retrofitting industrial Internet of Things (IIoT) sensor provided in the plant. As one example, the sensor 20 may be capable of acquiring measurement data obtained by measuring a physical quantity such as vibration, a temperature, a humidity, illuminance, odor, a gas concentration, a pressure, an atmospheric pressure, stress, a magnetic field, sound, or an image in the plant. Note that in the above description, the case where the sensor 20 is the retrofitting IIoT sensor provided in the plant has been illustrated as one example, but is not limited to this. For example, the sensor 20 may be a process control (measurement) sensor or the like previously provided in an operational technology (OT) region, or may also be an industrial sensor or the like connected to or integrally configured with one or a plurality of field devices provided in the plant. The measurement data measured by the sensor 20 is collected in the cloud platform 50 via a wireless module (not illustrated) or the like provided in the facility 10, for example, and managed in the cloud platform 50.

The cloud platform 50 is a cloud system provided in the facility 10. The cloud platform 50 has a necessary function such that the function unit configured to execute the AI processing constructs a state determination system of the facility 10. For example, the cloud platform 50 may have a function of saving the measurement data of the sensor 20 collected via the wireless module in a database. In addition, the cloud platform 50 may have a function of activating and executing an application in a cloud.

A plurality of cloud systems respectively having different specifications may exist for providers who provide cloud services, but any type may be used as a cloud provided in the facility 10. In the present drawing, a case is illustrated as one example where the cloud platform 50 has a first cloud platform 50A provided by a provider A and a second cloud platform 50B provided by a provider B (which are collectively referred to as the cloud platforms 50). The first cloud platform 50A may provide, for example, a representational state transfer (REST) application programing interface (API) as the interface. In addition, the second cloud platform 50B may provide, for example, GraphQL as the interface. In this manner, the plurality of cloud platforms 50 may provide a plurality of interfaces respectively having different specifications.

The interface apparatus 100 according to the present embodiment is configured to provide the interface between the cloud platforms 50 respectively having different specifications for the providers who provide the cloud services in this manner and the function unit configured to execute the AI processing.

The interface apparatus 100 may be a computer such as a personal computer (PC), a tablet computer, a smartphone, a work station, a server computer, or a general purpose computer, or a computer system in which a plurality of computers are connect to each other. Such a computer system is also the computer in a broad sense. In addition, the interface apparatus 100 may be implemented in one or a plurality of virtual computer environments which can be executed in the computer. Instead of this, the interface apparatus 100 may be a dedicated computer designed for the interface, or may also be dedicated hardware realized by a dedicated circuit. In addition, the interface apparatus 100 may be realized by cloud computing. For example, the interface apparatus 100 may be a system added in on the cloud platform 50 by execution of an interface program by the computer.

The interface apparatus 100 includes an interface unit 110 and a cloud communication unit 120. In addition, the interface apparatus 100 may further include an AI processing unit 200. These blocks are functional blocks functionally isolated from each other and do not necessarily need to match with actual device configurations. That is, one block illustrated in the present drawing does not necessarily need to be configured by one device. In addition, separate blocks illustrated in the present drawing do not necessarily need to be configured by separate devices.

In addition, in the present drawing, the case is illustrated as one example where the AI processing unit 200 is configured in an integrated manner with the interface unit 110 and the cloud communication unit 120 as a part of the functions of the interface apparatus 100, but is not limited to this. A part or whole of the AI processing unit 200 may be configured to be separated from the interface apparatus 100.

The interface unit 110 is configured to receive a first command using the protocol of the common form that is not dependent on the cloud platform 50 configured to manage the facility 10 from the AI processing unit 200 configured to execute at least either processing of generating the model for determining the state of the facility 10 by machine learning or processing of determining the state of the facility 10 using the model. Details of such a command will be described below. The interface unit 110 is configured to supply the first command received from the AI processing unit 200 to the cloud communication unit 120.

The cloud communication unit 120 is configured to communicate with the cloud platform 50. The cloud communication unit 120 has a plurality of specific communication units respectively corresponding to the plurality of cloud platforms 50. In the present invention the cloud communication unit 120 has a first cloud communication unit 120A corresponding to the first cloud platform 50A and a second cloud communication unit 120B corresponding to the second cloud platform 50B (which are collectively referred to as the cloud communication units 120).

The first cloud communication unit 120A is configured to convert the first command supplied from the interface unit 110 to the first cloud platform 50A into a command using a protocol of a form corresponding to REST API provided by the first cloud platform 50A, and transmits the converted command to the first cloud platform 50A. That is, the cloud communication unit 120 converts the first command supplied from the interface unit 110 into a second command using a protocol of a first form dependent on the first cloud platform 50A, and transmits the second command to the first cloud platform 50A. In the same manner, the second cloud communication unit 120B is configured to convert the first command supplied from the interface unit 110 to the second cloud platform 50B into a command using a protocol of a form corresponding to GraphQL provided by the second cloud platform 50B, and transmit the converted command to the second cloud platform 50B.

Note that in the above description, a case where the interface unit 110 and the cloud communication unit 120 relay the command from the AI processing unit 200 to the cloud platform 50 has been illustrated as one example, but the interface unit 110 and the cloud communication unit 120 may further relay the command in an opposite direction. That is, the interface unit 110 and the cloud communication unit 120 may relay the command from the cloud platform 50 to the AI processing unit 200. For example, the first cloud communication unit 120A may receive a third command using a protocol of the form corresponding to REST API from the first cloud platform 50A. Then, the first cloud communication unit 120A may convert the third command into a fourth command using the protocol of the common form, and supply the fourth command to the interface unit 110. That is, the cloud communication unit 120 may receive the third command using the protocol of the first form from the first cloud platform 50A, and convert the third command into a fourth command using the protocol of the common form. In the same manner, the second cloud communication unit 120B may receive the third command using the protocol of the form corresponding to GraphQL from the second cloud platform 50B. Then, the second cloud communication unit 120B may convert the third command into the fourth command using the protocol of the common form, and supply the fourth command to the interface unit 110. Then, the interface unit 110 may transmit the fourth command supplied from the first cloud communication unit 120A or the second cloud communication unit 120B to the AI processing unit 200.

In addition, in the above description, the case has been illustrated as one example where the cloud communication unit 120 is interposed between the interface unit 110 and the cloud platform 50, and the cloud communication unit 120 converts the command, but is not limited to this. When the command conversion for each of the cloud platforms 50 is not necessary, the interface apparatus 100 may omit the command conversion by the cloud communication unit 120. That is, the interface unit 110 and the cloud platform 50 may directly communicate with each other without the intermediation of the cloud communication unit 120.

The AI processing unit 200 is configured to execute at least either processing of generating the model for determining the state of the facility 10 by machine learning or processing of determining the state of the facility 10 using the model. Herein, the state determination processing of the facility 10 may be facility abnormality diagnosis processing of diagnosing an abnormality of the facility 10 as one example. However, the configuration is not limited to this. The state determination processing of the facility 10 may be deployed to processing related to various industrial solutions such as pipe corrosion diagnosis processing of diagnosing corrosion of a pipe.

The AI processing unit 200 has a learning unit 210, a learning model generation unit 220, a learning model management unit 230, a determination unit 240, and a determination processing unit 250. Note that these blocks are functional blocks respectively functionally isolated and do not necessarily need to match with actual device configurations. That is, one block illustrated in the present drawing does not necessarily need to be configured by one device. In addition, separate blocks illustrated in the present drawing do not necessarily need to be configured by separate devices.

The learning unit 210 is configured to generate the model for determining the state of the facility 10 by machine learning. For example, the learning unit 210 performs machine learning using data input by the learning model generation unit 220, and generates a learning model (AI model) for determining the state of the facility 10.

The learning model generation unit 220 is configured to operate in cooperation with the learning unit 210, and execute new creation and update processing of the model for determining the state of the facility 10. For example, the learning model generation unit 220 inputs data acquired from the cloud platform 50 via the interface unit 110 and the cloud communication unit 120 to the learning unit 210, and executes the new creation and update processing of the learning model using the learning unit 210.

The learning model management unit 230 is configured to manage information related to the model for determining the state of the facility 10. For example, the learning model management unit 230 stores and manages the information of the learning model generated by the learning unit 210 and the learning model generation unit 220 together with configuration information indicating a basic setting related to the learning model (for example, information of the sensor 20 used for the generation of the learning model, and information of a sampling interval of the sensor 20).

The determination unit 240 is configured to determine a state of the facility 10 using the model for determining the state of the facility 10. For example, the determination unit 240 determines the state of the facility 10 by the learning model generated by the learning unit 210 and the learning model generation unit 220 using the data input by the determination processing unit 250.

The determination processing unit 250 is configured to operate in cooperation with the determination unit 240 and execute determination processing of the facility 10 to write a determination result in a database of the cloud platform 50. For example, the determination processing unit 250 inputs data acquired from the cloud via the interface unit 110 and the cloud communication unit 120 to the determination unit 240, and executes the state determination processing of the facility 10 using the determination unit 240. Then, the determination processing unit 250 writes a determination result in the database of the cloud platform 50 via the interface unit 110 and the cloud communication unit 120.

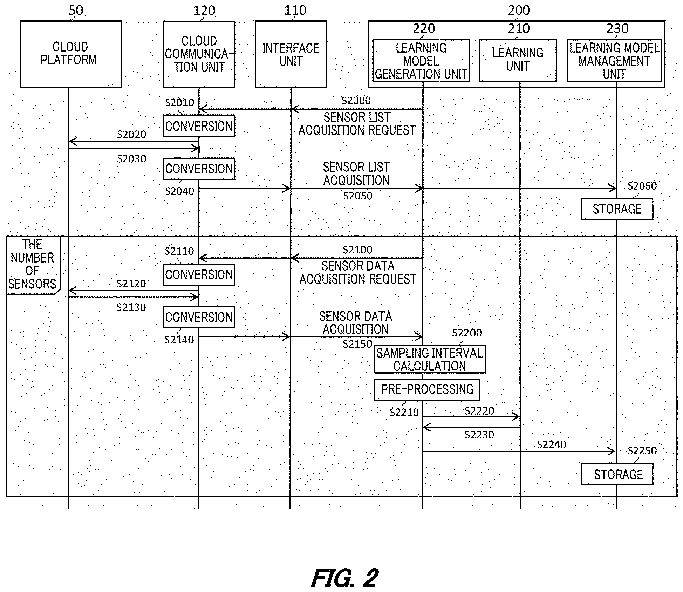

Fig. 2 illustrates one example of a generation flow of a learning model using the interface apparatus 100 according to the present embodiment. Note that processing of initializing the AI processing unit 200 may be executed before this flow. For example, the interface unit 110 may transmit an initialization command to the learning model generation unit 220. In response to this, the AI processing unit 200 may be initialized. Then, the learning model generation unit 220 may transmit a SUCCESS command indicating that the initialization is successful to the interface unit 110.

In step 2000, the AI processing unit 200 requests to acquire a list of the sensors 20 provided in the facility 10 managed by any of the cloud platforms 50. For example, the learning model generation unit 220 transmits a sensor list acquisition request command for requesting to acquire the list of the sensors 20 provided in the facility 10 managed by the first cloud platform 50A to the interface unit 110 as the first command using the protocol of the common form that is not dependent on the cloud platform 50. The interface unit 110 receives the sensor list acquisition request command using the protocol of the common form as the first command. Then, the interface unit 110 supplies the first command received from the learning model generation unit 220 to the first cloud communication unit 120A corresponding to the first cloud platform 50A. In this manner, the first command received by the interface unit 110 may include the sensor list acquisition request command for requesting to acquire the list of the sensors 20 provided in the facility 10 managed by the first cloud platform 50A.

In step 2010, the cloud communication unit 120 converts the first command using the protocol of the common form which is supplied in step 2000 into the second command using the protocol of the specific form dependent on any of the cloud platforms 50. For example, the first cloud communication unit 120A converts the first command using the protocol of the common form that is not dependent on the cloud platform 50 which is the sensor list acquisition request command for requesting to acquire the list of the sensors 20 provided in the facility 10 managed by the first cloud platform 50A into the second command using the protocol of the first form dependent on the first cloud platform 50A (form corresponding to REST API).

In step 2020, the cloud communication unit 120 transmits the second command converted in step 2010 to any of the cloud platforms 50. For example, the first cloud communication unit 120A transmits the second command converted in step 2010 to the first cloud platform 50A.

In step 2030, any of the cloud platforms 50 responds to the second command received in step 2020. For example, in response to the second command received in step 2020, the first cloud platform 50A transmits a sensor list acquisition command indicating a list of the sensors 20 provided in the facility 10 managed by itself to the first cloud communication unit 120A as the third command using the protocol of the first form.

In step 2040, the cloud communication unit 120 converts the third command using the protocol of the specific form which is received in step 2030 into the fourth command using the protocol of the common form. For example, the first cloud communication unit 120A converts the third command using the protocol of the first form dependent on the first cloud platform 50A which is the sensor list acquisition command indicating the list of the sensors 20 provided in the facility 10 managed by the first cloud platform 50A into the fourth command using the protocol of the common form that is not dependent on the cloud platform 50.

In step 2050, the cloud communication unit 120 transmits the fourth command converted in step 2040 to the AI processing unit 200 via the interface unit 110. For example, the first cloud communication unit 120A supplies the fourth command converted in step 2040 to the interface unit 110. Then, the interface unit 110 transmits the sensor list acquisition command using the protocol of the common form to the learning model generation unit 220. In response to this, the learning model generation unit 220 supplies the fourth command received from the interface unit 110 to the learning model management unit 230.

In step 2060, the AI processing unit 200 stores information related to the list of the sensors 20 provided in the facility 10 managed by any of the cloud platforms 50. For example, in response to the fourth command received in step 2050, the learning model management unit 230 stores the information related to the list of the sensors 20 provided in the facility 10 managed by the first cloud platform 50A. Thus, in step 2000 to step 2060, the acquisition processing of the sensor list using the interface apparatus 100 is executed.

In step 2100, the AI processing unit 200 requests to acquire measurement data of the sensors 20 provided in the facility 10 managed by any of the cloud platforms 50. For example, the learning model generation unit 220 identifies the sensors 20 needed to generate the learning model from the sensor list acquired in step 2050. Then, the learning model generation unit 220 transmits a sensor data acquisition request command for requesting to acquire the measurement data of the identified sensors 20 to the interface unit 110 as the first command using the protocol of the common form that is not dependent on the cloud platform 50. The interface unit 110 receives the sensor data acquisition request command using the protocol of the common form as the first command. Then, the interface unit 110 supplies the first command received from the learning model generation unit 220 to the first cloud communication unit 120A corresponding to the first cloud platform 50A. In this manner, the first command to be accepted by the interface unit 110 may include the sensor data acquisition request command for requesting to acquire the measurement data of the sensors 20 provided in the facility 10 managed by the first cloud platform 50A.

In step 2110, the cloud communication unit 120 converts the first command using the protocol of the common form which is supplied in step 2100 into the second command using the protocol of the specific form dependent on any of the cloud platforms 50. For example, the first cloud communication unit 120A converts the first command using the protocol of the common form that is not dependent on the cloud platform 50 which is the sensor data acquisition request command for requesting to acquire the measurement data of the sensors 20 provided in the facility 10 managed by the first cloud platform 50A into the second command using the protocol of the first form dependent on the first cloud platform 50A.

In step 2120, the cloud communication unit 120 transmits the second command converted in step 2110 to any of the cloud platforms 50. For example, the first cloud communication unit 120A transmits the second command converted in step 2110 to the first cloud platform 50A.

In step 2130, any of the cloud platforms 50 responds to the second command received in step 2120. For example, in response to the second command received in step 2120, the first cloud platform 50A transmits the sensor data acquisition command indicating the measurement data of the sensors 20 provided in the facility 10 managed by itself to the first cloud communication unit 120A as the third command using the protocol of the first form.

In step 2140, the cloud communication unit 120 converts the third command using the protocol of the specific form which is received in step 2130 into the fourth command using the protocol of the common form. For example, the first cloud communication unit 120A converts the third command using the protocol of the first form dependent on the first cloud platform 50A which is the sensor data acquisition command indicating the measurement data of the sensors 20 provided in the facility 10 managed by the first cloud platform 50A into the fourth command using the protocol of the common form that is not dependent on the cloud platform 50.

In step 2150, the cloud communication unit 120 transmits the fourth command converted in step 2140 to the AI processing unit 200 via the interface unit 110. For example, the first cloud communication unit 120A supplies the fourth command converted in step 2140 to the interface unit 110. Then, the interface unit 110 transmits the sensor data acquisition command using the protocol of the common form to the learning model generation unit 220. Thus, in step 2100 to step 2150, the sensor data acquisition processing using the interface apparatus 100 is executed.

In step 2200, the AI processing unit 200 calculates a sampling interval. For example, before the learning model is generated, the learning model generation unit 220 calculates the sampling interval from the measurement data acquired in time series in step 2150. For example, with regard to the calculation of the sampling interval in the learning model generation unit 220, in addition to a time at which the sensors 20 have acquired the data (which is added to the sensor data), a time at which the interface unit 110 has received the fourth command or the like may be used for the calculation.

In step 2210, the AI processing unit 200 executes pre-processing. For example, before the learning model is generated, the learning model generation unit 220 applies the pre-processing to the measurement data acquired in step 2150. Examples of the above-mentioned pre-processing include, for example, processing of interpolation (a previous value, an average value, a median value, a mode value, a straight line, or the like), waveform compression, moving average, standardization, normalization, or the like.

In step 2220 and step 2230, the AI processing unit 200 generates the model for determining the state of the facility 10 by machine learning. For example, in step 2220, the learning model generation unit 220 inputs the measurement data which is acquired in step 2150 and to which the pre-processing is applied in step 2210 to the learning unit 210. In response to this, the learning unit 210 performs machine learning, and generates the learning model (AI model) for determining the state of the facility 10. Then, in step 2230, the learning model generation unit 220 acquires the generated learning model from the learning unit 210. Herein, various algorithms may be used for the machine learning for generating the learning model. Since such learning processing itself has been proposed in related art, the description thereof will be omitted here.

In step 2240, the learning model generation unit 220 supplies the information of the learning model generated in step 2220 and step 2230 to the learning model management unit 230 together with the configuration information indicating the basic setting related to the learning model (for example, the information of the sensors 20 used for generating the learning model (the sensors 20 identified in step 2100) and the information of the sampling interval of the sensors 20).

In step 2250, the AI processing unit 200 stores the information of the learning model together with the configuration information. For example, the learning model management unit 230 stores the information of the learning model which is supplied in step 2240 in association with the information related to the sensors 20 used for generating the learning model and the information related to the sampling interval of the sensors 20. Thus, in step 2200 to step 2250, the generation processing of the learning model using the interface apparatus 100 is executed.

The sensor data acquisition processing (step 2100 to step 2150) and the learning model generation processing (step 2200 to step 2250) described above may be repeated and executed by the same number of times as the number of the sensors 20 configured to generate the learning model. Note that in the above description, the case has been illustrated as one example where each one of the learning models is generated by the AI processing unit 200 using the measurement data acquired from one of the sensors 20, but is not limited to this. The AI processing unit 200 may generate one or a plurality of the learning models using the measurement data acquired from the plurality of sensors 20.

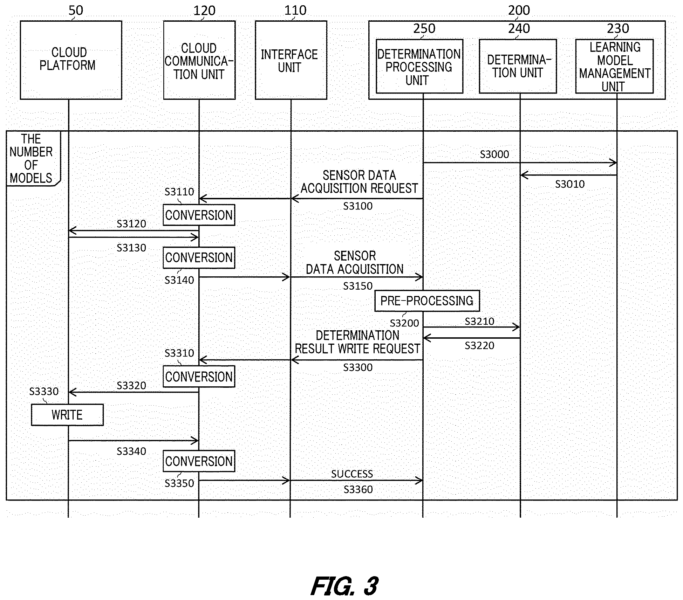

Fig. 3 illustrates one example of a determination flow by the learning model using the interface apparatus 100 according to the present embodiment. This flow may be executed, for example, after the generation flow of the learning model illustrated in Fig. 2.

In step 3000 and step 3010, the AI processing unit 200 prepares a model for determining the state of the facility 10. For example, in step 3000, the determination processing unit 250 requests the learning model management unit 230 for the learning model used for the state determination. Then, in step 3010, the learning model management unit 230 supplies the learning model used for the state determination to the determination unit 240. Note that the learning model supplied herein may be the learning model generated by the flow of Fig. 2, for example, or a different learning model.

Since the processing in step 3100 to step 3150 and the processing in step 3200 are respectively similar to the processing in step 2100 to step 2150 and the processing in step 2210 in Fig. 2, the description thereof will be omitted here.

In step 3210 and step 3220, the AI processing unit 200 determines the state of the facility 10 using the model. For example, in step 3210, the determination processing unit 250 inputs, to the determination unit 240, the measurement data which is acquired in step 3150 and to which the same pre-processing as that at the time of the learning is applied in step 3200. In response to this, the determination unit 240 executes the determination processing using the learning model and determines the state of the facility 10. Then, in step 3220, the determination processing unit 250 acquires a determination result obtained by determining the state of the facility 10 from the determination unit 240. Since such determination processing itself has been proposed in related art, the description thereof will be omitted here.

In step 3300, the AI processing unit 200 requests to write the determination result obtained by determining the state of the facility 10 in the database of any of the cloud platforms 50. For example, the determination processing unit 250 transmits a determination result write request command for requesting to write the determination result obtained by determining the state of the facility 10 managed by the first cloud platform 50A in the database of the first cloud platform 50A to the interface unit 110 as the first command using the protocol of the common form that is not dependent on the cloud platform 50. The interface unit 110 receives the determination result write request command using the protocol of the common form as the first command. Then, the interface unit 110 supplies the first command received from the determination processing unit 250 to the first cloud communication unit 120A. In this manner, the first command to be accepted by the interface unit 110 may include the determination result write request command for requesting to write the determination result obtained by determining the state of the facility 10 by the AI processing unit 200 in the database of the first cloud platform 50A.

In step 3310, the cloud communication unit 120 converts the first command using the protocol of the common form which is supplied in step 3300 into the second command using the platform of the specific form dependent on any of the cloud platforms 50. For example, the first cloud communication unit 120A converts the first command using the protocol of the common form that is not dependent on the cloud platform 50 which is the determination result write request command for requesting to write the determination result obtained by determining the state of the facility 10 managed by the first cloud platform 50A in the database of the first cloud platform 50A into the second command using the protocol of the first form dependent on the first cloud platform 50A.

In step 3320, the cloud communication unit 120 transmits the second command converted in step 3310 to any of the cloud platforms 50. For example, the first cloud communication unit 120A transmits the second command converted in step 3310 to the first cloud platform 50A.

In step 3330, any of the cloud platforms 50 writes the determination result. For example, in response to the second command received in step 3320, the first cloud platform 50A writes the determination result obtained determining the state of the facility 10 by the AI processing unit 200 into its own database.

In step 3340, any of the cloud platforms 50 transmits a response to the second command to the cloud communication unit 120. For example, in response to the successful write of the determination result in its own database, the first cloud platform 50A transmits the SUCCESS command indicating the successful write to the first cloud communication unit 120A as the third command using the protocol of the first form.

In step 3350, the cloud communication unit 120 converts the third command using the protocol of the specific form which is received in step 3340 into the fourth command using the protocol of the common form. For example, the first cloud communication unit 120A converts the third command using the protocol of the first form dependent on the first cloud platform 50A which is the SUCCESS command indicating the successful write of the determination result in the database of the first cloud platform 50A into the fourth command using the protocol of the common form that is not dependent on the cloud platform 50.

In step 3360, the cloud communication unit 120 transmits the fourth command converted in step 3350 to the AI processing unit 200 via the interface unit 110. For example, the first cloud communication unit 120A supplies the fourth command converted in step 3350 to the interface unit 110. Then, the interface unit 110 transmits the SUCCESS command using the protocol of the common form to the determination processing unit 250. Thus, in step 3000 to step 3360, the determination processing by the learning model using the interface apparatus 100 is executed.

Such determination processing by the learning model (step 3000 to step 3360) may be repeated and executed by the same number of times as the number of the learning models used for determining the state of the facility 10. Note that in the above description, the case has been illustrated as one example where the AI processing unit 200 determines the state of the facility 10 using the measurement data acquired from one of the sensors 20, but is not limited to this. The AI processing unit 200 may determine the state of the facility 10 using the measurement data acquired from the plurality of sensors 20.

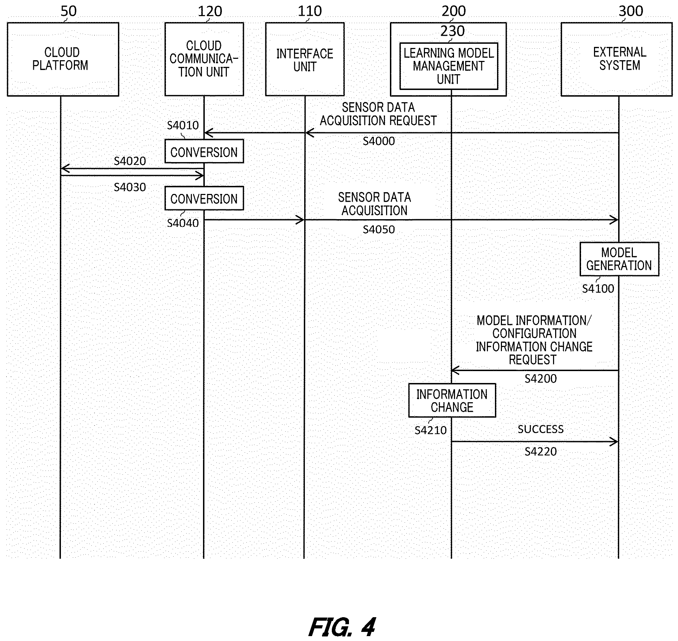

Fig. 4 illustrates one example of a flow for updating the learning model from an external system 300 using the interface apparatus 100 according to the present embodiment. Herein, the external system 300 is, for example, a system having a function of generating a customized learning model which is a system provided outside the interface apparatus 100.

Since processing in step 4000 to step 4050 is similar to the processing in step 2100 to step 2150 in Fig. 2 except that the learning model generation unit 220 is replaced with the external system 300, the description thereof will be omitted here.

In step 4100, the external system 300 generates a model for determining the state of the facility 10 using the measurement data supplied in step 4050.

In step 4200, the external system 300 requests for a change (for example, addition, update, and deletion) of at least any of the information of the learning model or the configuration information which are stored in an internal memory (for example, the learning model management unit 230) of the cloud platform 50. For example, in step 4200, the external system 300 transmits at least any of a model information change request command for requesting to change the information of the model managed by the cloud platform 50 or a configuration information change request command for requesting to change the configuration information to the learning model management unit 230.

In step 4210, the learning model management unit 230 changes the information managed by itself in response to the command received in step 4200. For example, in response to the model information change request command received in step 4200, the learning model management unit 230 changes (for example, adds, updates, and deletes) the information of the model managed by itself. In addition, in response to the configuration information change request command received in step 4200, the learning model management unit 230 changes (for example, adds, updates, and deletes) the configuration information managed by itself.

In step 4220, the learning model management unit 230 transmits a response to the command received in step 4200 to the external system 300. For example, in response to the successful change of the information managed by itself, the learning model management unit 230 transmits the SUCCESS command indicating the successful change of the information to the external system 300.

In this manner, the interface apparatus 100 supports the external system 300 to acquire the measurement data for generating the learning model, and also, in response to the generation of the learning model by the external system 300, changes the information of the model or the configuration information which are stored in the internal memory of the cloud platform 50. With this configuration, when the flow of Fig. 3 is executed after the flow of Fig. 4 is executed, for example, the interface apparatus 100 can execute the state determination processing using the learning model generated by the external system 300.

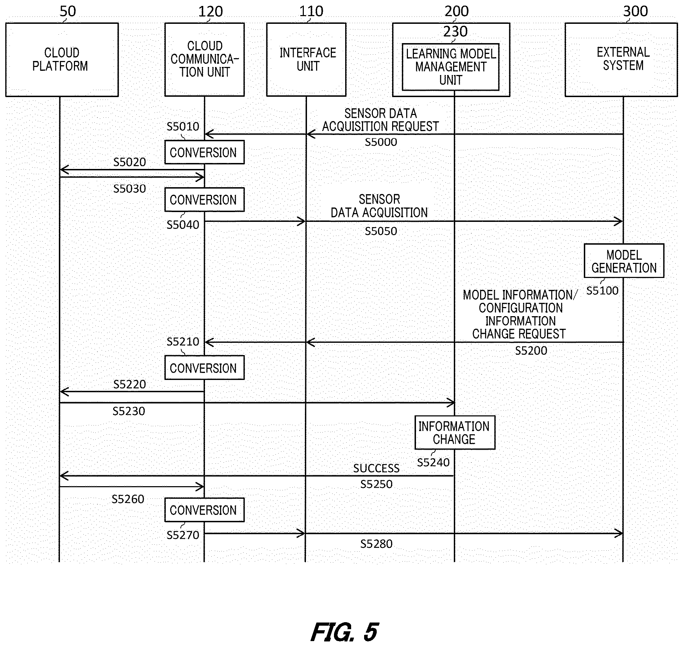

Fig. 5 illustrates another example of the flow for updating the learning model from the external system 300 using the interface apparatus 100 according to the present embodiment. Since the processing in step 5000 to step 5100 is similar to the processing in step 4000 to step 4100 in Fig. 4, the description thereof will be omitted here. In the flow of Fig. 4, the case has been illustrated where the external system 300 directly requests the learning model management unit 230 to change the information stored in the internal memory of the cloud platform 50, but in this flow, the external system 300 requests the learning model management unit 230 via the cloud platform 50 to change the information stored in the internal memory of the cloud platform 50.

In step 5200, the external system 300 requests to change at least any of the information of the learning model or the configuration information which are stored in the internal memory of any of the cloud platforms 50. For example, in step 5200, the external system 300 transmits at least any of the model information change request command for requesting to change the information of the model managed by the first cloud platform 50A or the configuration information change request command for requesting to change the configuration information to the interface unit 110 as the first command using the protocol of the common form that is not dependent on the cloud platform 50. Then, the interface unit 110 supplies the first command received from the external system 300 to the first cloud communication unit 120A corresponding to the first cloud platform 50A. In this manner, the first command to be accepted by the interface unit 110 may include the model information change request command for requesting to change the information of the model managed by the first cloud platform 50A. In addition, the first command to be accepted by the interface unit 110 may include the configuration information change request command for requesting to change the configuration information managed by the first cloud platform 50A.

In step 5210, the cloud communication unit 120 converts the first command using the protocol of the common form which is supplied in step 5200 into the second command using the protocol of the specific form dependent on any of the cloud platforms 50. For example, the first cloud communication unit 120A converts the first command using the protocol of the common form that is not dependent on the cloud platform 50 which is at least any of the model information change request command for requesting to change the information of the model managed by the first cloud platform 50A or the configuration information change request command for requesting to change the configuration information into the second command using the protocol of the first form dependent on the first cloud platform 50A.

In step 5220, the cloud communication unit 120 transmits the second command converted in step 5210 to any of the cloud platforms 50. For example, the first cloud communication unit 120A transmits the second command converted in step 5210 to the first cloud platform 50A.

In step 5230, any of the cloud platforms 50 transfers the second command received in step 5220 to the learning model management unit 230. For example, the first cloud platform 50A transfers the second command received in step 5220 to the learning model management unit 230 added in to itself.

In step 5240, in response to the second command received in step 5230, the learning model management unit 230 changes the information to be managed by itself. Since step 5240 is similar to the processing of step 4210 in Fig. 4, the description thereof will be omitted here.

In step 5250, the learning model management unit 230 transmits a response to the second command received in step 5230 to any of the cloud platforms 50. For example, in response to the successful change of the information to be managed by itself, the learning model management unit 230 transmits the SUCCESS command indicating the successful change of the information to the first cloud platform 50A.

In step 5260, any of the cloud platforms 50 transmits the response to the command received in step 5250 to the cloud communication unit 120. For example, in response to the reception of the SUCCESS command in step 5250, the first cloud platform 50A transmits the command to the first cloud communication unit 120A as the third command using the protocol of the first form.

In step 5270, the cloud communication unit 120 converts the third command received in step 5260 into the fourth command using the protocol of the common form. For example, the first cloud communication unit 120A converts the third command using the protocol of the first form dependent on the first cloud platform 50A which is the SUCCESS command indicating the successful change of the information into the fourth command using the protocol of the common form that is not dependent on the cloud platform 50.

In step 5280, the cloud communication unit 120 transmits the fourth command converted in step 5270 to the external system 300 via the interface unit 110. For example, the first cloud communication unit 120A supplies the fourth command converted in step 5270 to the interface unit 110. Then, the interface unit 110 transmits the SUCCESS command using the protocol of the common form to the external system 300.

In this manner, the interface apparatus 100 also provides the interface for changing the information stored in the internal memory of the cloud platform 50 from the external system 300 via the cloud platform. With this configuration, even when any type of the cloud platforms 50 is used, it is facilitated to access the information saved in the internal memory of the cloud platform 50 from the external system 300.

In recent years, selectable cloud platforms have been diversified, it has become less easy to incorporate the function unit configured to execute the AI processing in the diverse cloud platforms. At this time, a system in which the cloud platform is integrated with the function unit configured to execute the AI processing is preferably provided, but in reality, users having already introduced the cloud system exist, and there are cases where only the function unit configured to execute the AI processing is newly introduced in a retrofitting manner. In such a case, a system engineer responsible for cloud construction needs to understand interface materials of the already introduced platform and the newly introduced function unit configured to execute the AI processing for the incorporation, and construction operations are complex. In addition, an incorporation operational error in an engineering process tends to occur.

In contrast, the interface apparatus 100 according to the present embodiment provides the interface between the AI processing unit 200 configured to execute the AI processing and the cloud platform 50. In particular, the interface apparatus 100 according to the present embodiment receives the first command using the protocol of the common form that is not dependent on the cloud platform 50 from the AI processing unit 200. Then, the interface apparatus 100 converts the first command using the protocol of the common form into the second command using the protocol of the specific form dependent on any of the cloud platforms 50, and transmits the converted second command to any of the cloud platforms 50. With this configuration, in accordance with the interface apparatus 100 according to the present embodiment, the AI processing unit 200 does not need to generate the specific command for each of the cloud platforms 50, and a load of the AI processing unit 200 can be alleviated. In addition, since the AI processing unit 200 is not dependent on various specifications of the cloud platforms 50, the update of the AI processing unit 200 can be easily performed without taking influences on the cloud platforms 50 into account. In this manner, in accordance with the interface apparatus 100 according to the present embodiment, it is possible to easily incorporate the function unit configured to execute the AI processing in various cloud environments.

In addition, the interface apparatus 100 according to the present embodiment receives the third command using the protocol of the specific form dependent on the cloud platform 50 from the cloud platform 50. Then, the interface apparatus 100 converts the third command using the protocol of the specific form into the fourth command using the protocol of the common form that is not dependent on the cloud platform 50, and transmits the converted fourth command to the AI processing unit 200. With this configuration, in accordance with the interface apparatus 100 according to the present embodiment, it is possible to provide the bidirectional interface from the AI processing unit 200 to the cloud platform 50 and from the cloud platform 50 to the AI processing unit 200.

In addition, the interface apparatus 100 according to the present embodiment has the plurality of specific communication units respectively corresponding to the plurality of cloud platforms 50. With this configuration, in accordance with the interface apparatus 100 according to the present embodiment, it is possible to provide the interface between the AI processing unit 200 and the plurality of cloud platforms 50 respectively having the different specifications. In addition, in accordance with the interface apparatus 100 according to the present embodiment, it is possible to provide the interface between the AI processing unit 200 and the new cloud platform 50 by simply adding the specific communication unit.

In addition, the interface apparatus 100 according to the present embodiment accepts at least any of the sensor list acquisition request command, the sensor data acquisition request command, the determination result write request command, the model information change request command, or the configuration information change request command as the first command. With this configuration, the interface apparatus 100 according to the present embodiment can relay the command related to the AI processing (such as the learning processing or the determination processing) for determining the state of the facility 10 between the AI processing unit 200 and the cloud platform 50.

In addition, the interface apparatus 100 according to the present embodiment includes, for example, the AI processing unit having the learning unit and the determination unit. With this configuration, in accordance with the interface apparatus 100 according to the present embodiment, the interface function and the function for executing the AI processing can be configured as the integrated apparatus.

Various embodiments of the present invention may be described with reference to flowcharts and block diagrams whose blocks may represent (1) steps of processes in which operations are performed or (2) sections of devices responsible for performing operations. Certain steps and sections may be implemented by a dedicated circuit, programmable circuitry supplied with computer readable instructions stored on computer readable media, and/or processors supplied with computer readable instructions stored on computer readable media. A dedicated circuit may include digital and/or analog hardware circuits and may include integrated circuits (IC) and/or discrete circuits. Programmable circuitry may include reconfigurable hardware circuits including logical AND, OR, XOR, NAND, NOR, and other logical operations, flip-flops, registers, memory elements, etc., such as field-programmable gate arrays (FPGA), programmable logic arrays (PLA), etc.

Computer readable media may include any tangible device that can store instructions for execution by a suitable device, such that the computer readable medium having instructions stored therein comprises an article of manufacture including instructions which can be executed to create means for performing operations specified in the flowcharts or block diagrams. Examples of computer readable media may include an electronic storage medium, a magnetic storage medium, an optical storage medium, an electromagnetic storage medium, a semiconductor storage medium, etc. More specific examples of computer readable media may include a floppy (registered trademark) disk, a diskette, a hard disk, a random access memory (RAM), a read only memory (ROM), an erasable programmable read only memory (EPROM or Flash memory), an electrically erasable programmable read only memory (EEPROM), a static random access memory (SRAM), a compact disc read only memory (CD-ROM), a digital versatile disk (DVD), a BLU-RAY (registered trademark) disc, a memory stick, an integrated circuit card, etc.

Computer readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer readable instructions may be provided to a processor of a general purpose computer, special purpose computer, or other programmable data processing device, or to programmable circuitry, locally or via a local area network (LAN), wide area network (WAN) such as the Internet, etc., to execute the computer readable instructions to create means for performing operations specified in the flowcharts or block diagrams. Examples of processors include computer processors, processing units, microprocessors, digital signal processors, controllers, microcontrollers, etc.

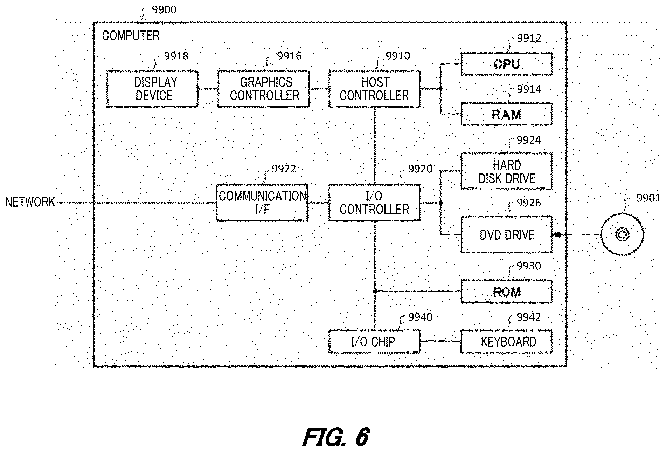

Fig. 6 illustrates an example of a computer 9900 through which a plurality of aspects of the present invention may be entirely or partially embodied. A program that is installed in the computer 9900 can cause the computer 9900 to function as or perform operations associated with apparatuses of the embodiments of the present invention or one or more sections thereof, or perform the operations or the one or more sections, and/or cause the computer 9900 to perform processes of the embodiments of the present invention or steps of the processes. Such a program may be executed by the CPU 9912 to cause the computer 9900 to perform certain operations associated with some or all of the blocks of flowcharts and block diagrams described herein.

The computer 9900 according to the present embodiment includes a CPU 9912, a RAM 9914, a graphics controller 9916, and a display device 9918, which are mutually connected by a host controller 9910. The computer 9900 also includes input/output units such as a communication interface 9922, a hard disk drive 9924, a DVD-ROM drive 9926 and an IC card drive, which are connected to the host controller 9910 via an input/output controller 9920. The computer also includes legacy input/output units such as a ROM 9930 and a keyboard 9942, which are connected to the input/output controller 9920 through an input/output chip 9940.

The CPU 9912 operates according to programs stored in the ROM 9930 and the RAM 9914, thereby controlling each unit. The graphics controller 9916 obtains image data generated by the CPU 9912 on a frame buffer or the like provided in the RAM 9914 or in itself, and causes the image data to be displayed on the display device 9918.

The communication interface 9922 communicates with other electronic devices via a network. The hard disk drive 9924 stores programs and data used by the CPU 9912 within the computer 9900. The DVD-ROM drive 9926 reads the programs or the data from the DVD-ROM 9901, and provides the hard disk drive 9924 with the programs or the data via the RAM 9914. The IC card drive reads programs and data from an IC card, and/or writes programs and data into the IC card.

The ROM 9930 stores therein a boot program or the like executed by the computer 9900 at the time of activation, and/or a program depending on the hardware of the computer 9900. The input/output chip 9940 may also connect various input/output units via a parallel port, a serial port, a keyboard port, a mouse port, or the like to the input/output controller 9920.

A program is provided by computer readable media such as the DVD-ROM 9901 or the IC card. The program is read from the computer readable media, installed into the hard disk drive 9924, RAM 9914, or ROM 9930, which are also examples of computer readable media, and executed by the CPU 9912. The information processing described in these programs is read into the computer 9900, resulting in cooperation between a program and the above-mentioned various types of hardware resources. An apparatus or method may be constituted by realizing the operation or processing of information in accordance with the usage of the computer 9900.

For example, when communication is performed between the computer 9900 and an external device, the CPU 9912 may execute a communication program loaded onto the RAM 9914 to instruct communication processing to the communication interface 9922, based on the processing described in the communication program. The communication interface 9922, under control of the CPU 9912, reads transmission data stored on a transmission buffering region provided in a recording medium such as the RAM 9914, the hard disk drive 9924, the DVD-ROM 9901, or the IC card, and transmits the read transmission data to a network or writes reception data received from a network to a reception buffering region or the like provided on the recording medium.

In addition, the CPU 9912 may cause all or a necessary portion of a file or a database to be read into the RAM 9914, the file or the database having been stored in an external recording medium such as the hard disk drive 9924, the DVD-ROM drive 9926 (DVD-ROM 9901), the IC card, etc., and perform various types of processing on the data on the RAM 9914. The CPU 9912 may then write back the processed data to the external recording medium.

Various types of information, such as various types of programs, data, tables, and databases, may be stored in the recording medium to undergo information processing. The CPU 9912 may perform various types of processing on the data read from the RAM 9914, which includes various types of operations, processing of information, condition judging, conditional branch, unconditional branch, search/replace of information, etc., as described throughout this disclosure and designated by an instruction sequence of programs, and writes the result back to the RAM 9914. In addition, the CPU 9912 may search for information in a file, a database, etc., in the recording medium. For example, when a plurality of entries, each having an attribute value of a first attribute associated with an attribute value of a second attribute, are stored in the recording medium, the CPU 9912 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on the computer 9900 or near the computer 9900. In addition, a recording medium such as a hard disk or a RAM provided in a server system connected to a dedicated communication network or the Internet can be used as the computer readable media, thereby providing the program to the computer 9900 via the network.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 facility
20 sensor
50 cloud platform
100 interface apparatus
110 interface unit
120 cloud communication unit
200 AI processing unit
210 learning unit
220 learning model generation unit
230 learning model management unit
240 determination unit
250 determination processing unit
9900 computer
9901 DVD-ROM
9910 host controller
9912 CPU
9914 RAM
9916 graphics controller
9918 display device
9920 input/output controller
9922 communication interface
9924 hard disk drive
9926 DVD-ROM drive
9930 ROM
9940 input/output chip
9942 keyboard

## Claims

1. A system comprising:
a first cloud platform (50A);
a second cloud platform (50B);
**characterized in that** the system further comprises
an interface apparatus (100) comprising:
an Al processing unit (200) configured to execute at least either processing of generating a model for determining a state of a facility by machine learning or processing of determining the state of the facility using the model;
an interface unit (110) configured to receive, from the Al processing unit (200), a first command according to a protocol of a common form that is common for a plurality of cloud platforms respectively having different specifications and being configured to manage the facility; and
a cloud communication unit (120) configured to convert the first command into a second command according to a protocol of a form corresponding to an interface provided by a cloud platform and transmit the second command to the cloud platform; wherein
the cloud communication unit (120) includes
a first specific cloud communication unit (120A) corresponding to the first cloud platform (50A) and configured to convert the first command into the second command using a protocol of a first form corresponding to a first interface provided by the first cloud platform (50A), and transmit the second command using the protocol of the first form to the first cloud platform (50A), and
a second specific cloud communication unit (120B) corresponding to the second cloud platform (50B) and configured to convert the first command into the second command using a protocol of a second form corresponding to a second interface provided by the second cloud platform (50B), and transmit the second command using the protocol of the second form to the second cloud platform (50B).

2. The system according to claim 1, wherein:
the cloud communication unit (120) is configured to receive a third command using the protocol of the form from the cloud platform and convert the third command into a fourth command using the protocol of the common form; and
the interface unit (110) is configured to transmit the fourth command to the Al processing unit (200).

3. The system according to claim 1 or 2, wherein the first command includes a sensor list acquisition request command for requesting to acquire a list of sensors provided in the facility managed by the cloud platform.

4. The system according to any one of claims 1 to 3, wherein the first command includes a sensor data acquisition request command for requesting to acquire measurement data of a sensor provided in the facility managed by the cloud platform.

5. The system according to any one of claims 1 to 4, wherein the first command includes a determination result write request command for requesting to write a determination result obtained by determining the state of the facility in a database of the cloud platform.

6. The system according to any one of claims 1 to 5, wherein the first command includes a model information change request command for requesting to change information of the model managed by the cloud platform.

7. The system according to any one of claims 1 to 6, wherein the first command includes a configuration information change request command for requesting to change configuration information managed by the cloud platform.

8. The system according to claim 1, wherein the Al processing unit (200) includes a learning unit (210) configured to generate the model by machine learning.

9. The system according to claim 1 or 8, wherein the Al processing unit (200) includes a determination unit (240) configured to determine the state of the facility using the model.

10. An interface method for use in a system having a first cloud platform (50A), a second cloud platform (50B) and an Al processing unit (200) configured to execute at least either processing of generating a model for determining a state of a facility by machine learning or processing of determining the state of the facility using the model, the method comprising:
receiving, from the Al processing unit (200) a first command according to a protocol of a common form that is common for a plurality of cloud platforms respectively having different specifications and being configured to manage the facility; and
converting the first command into a second command according to a protocol of a form corresponding to an interface provided by a cloud platform and transmitting the second command to the cloud platform, wherein
the converting includes
converting, by a first specific cloud communication unit (120A) corresponding to the first cloud platform (50A), the first command into the second command using a protocol of a first form corresponding to a first interface provided by the first cloud platform (50A), and transmitting the second command using the protocol of the first form to the first cloud platform (50A), and
converting, by a second specific cloud communication unit (120 B) corresponding to the second cloud platform (50 B), the first command into the second command using a protocol of a second form corresponding to a second interface provided by the second cloud platform (50B), and transmitting the second command using the protocol of the second form to the second cloud platform (50B).

11. An interface program that, when executed by a computer in a system having a first cloud platform (50A), a second cloud platform (50B) and an Al processing unit (200) configured to execute at least either processing of generating a model for determining a state of a facility by machine learning or processing of determining the state of the facility using the model, causes the computer to function as:
an interface unit (110) configured to receive, from the Al processing unit (200), a first command according to a protocol of a common form that is common for a plurality of cloud platforms respectively having different specifications and being configured to manage the facility;
a cloud communication unit (120) configured to convert the first command into a second command according to a protocol of a form corresponding to an interface provided by a cloud platform and transmit the second command to the cloud platform; and
the Al processing unit (200), wherein
the cloud communication unit (120) includes
a first specific cloud communication unit (120A) corresponding to the first cloud platform (50A) and configured to convert the first command into the second command using a protocol of a first form corresponding to a first interface provided by the first cloud platform (50B), and transmit the second command using the protocol of the first form to the first cloud platform (50A), and
a second specific cloud communication unit (120B) corresponding to the second cloud platform (50B) and configured to convert the first command into the second command using a protocol of a second form corresponding to a second interface provided by the second cloud platform (50B), and transmit the second command using the protocol of the second form to the second cloud platform.

12. A computer readable recording medium storing the program according to claim 11.

## Patentansprüche

1. System, das aufweist:
eine erste Cloud-Plattform (50A);
eine zweite Cloud-Plattform (50B);
**dadurch gekennzeichnet, dass** das System außerdem aufweist:
eine Schnittstellenvorrichtung (100), die aufweist:
eine KI-Verarbeitungseinheit (200), die ausgelegt ist, mindestens entweder eine Verarbeitung zum Erzeugen eines Modells zum Bestimmen eines Zustands einer Anlage durch Maschinenlernen oder eine Verarbeitung zum Bestimmen des Zustands der Anlage unter Verwendung des Modells auszuführen;
eine Schnittstelleneinheit (110), die ausgelegt ist, von der KI-Verarbeitungseinheit (200) einen ersten Befehl entsprechend einem Protokoll einer gemeinsamen Form, die mehreren Cloud-Plattformen gemeinsam ist, die jeweils unterschiedliche Spezifikationen aufweisen und ausgelegt sind, die Anlage zu verwalten, zu empfangen; und
eine Cloud-Kommunikationseinheit (120), die ausgelegt ist, den ersten Befehl in einen zweiten Befehl entsprechend einem Protokoll einer Form, die zu einer Schnittstelle korrespondiert, die durch eine Cloud-Plattform bereitgestellt wird, umzuwandeln und den zweiten Befehl an die Cloud-Plattform zu übertragen; wobei
die Cloud-Kommunikationseinheit (120) enthält:
eine erste spezielle Cloud-Kommunikationseinheit (120A), die zu der ersten Cloud-Plattform (50A) entspricht und ausgelegt ist, den ersten Befehl in den zweiten Befehl unter Verwendung eines Protokolls einer ersten Form umzuwandeln, die einer ersten Schnittstelle korrespondiert, die durch die erste Cloud-Plattform (50A) bereitgestellt wird, und den zweiten Befehl unter Verwendung des Protokolls der ersten Form an die erste Cloud-Plattform (50A) zu übertragen, und
eine zweite spezielle Cloud-Kommunikationseinheit (120B), die zu der zweiten Cloud-Plattform (50B) korrespondiert und ausgelegt ist, den ersten Befehl in den zweiten Befehl unter Verwendung eines Protokolls einer zweiten Form umzuwandeln, die zu einer zweiten Schnittstelle korrespondiert, die durch die zweite Cloud-Plattform (50B) bereitgestellt wird, und den zweiten Befehl unter Verwendung des Protokolls der zweiten Form an die zweite Cloud-Plattform (50B) zu übertragen.

2. System nach Anspruch 1, wobei
die Cloud-Kommunikationseinheit (120) ausgelegt ist, einen dritten Befehl unter Verwendung des Protokolls der Form von der Cloud-Plattform zu empfangen und den dritten Befehl in einen vierten Befehl unter Verwendung des Protokolls der gemeinsamen Form umzuwandeln; und
die Schnittstelleneinheit (110) ausgelegt ist, den vierten Befehl an die KI-Verarbeitungseinheit (200) zu übertragen.

3. System nach Anspruch 1 oder 2, wobei der erste Befehl einen Sensorlistenbeschaffungsanfragebefehl zum Anfragen zum Beschaffen einer Liste von Sensoren, die in der Anlage angeordnet sind, die durch die Cloud-Plattform verwaltet wird, enthält.

4. System nach einem der Ansprüche 1 bis 3, wobei der erste Befehl einen Sensordatenbeschaffungsanfragebefehl zum Anfragen zum Beschaffen von Messdaten eines Sensors, der in der Anlage angeordnet ist, die durch die Cloud-Plattform verwaltet wird, enthält.

5. System nach einem der Ansprüche 1 bis 4, wobei der erste Befehl einen Bestimmungsergebnisschreibanfragebefehl zum Anfragen zum Schreiben eines Bestimmungsergebnisses, das durch Bestimmen des Zustands der Anlage erhalten wird, in eine Datenbank der Cloud-Plattform enthält.

6. System nach einem der Ansprüche 1 bis 5, wobei der erste Befehl einen Modellinformationsänderungsanfragebefehl zum Anfragen zum Ändern von Informationen des Modells, das durch die Cloud-Plattform verwaltet wird, enthält.

7. System nach einem der Ansprüche 1 bis 6, wobei der erste Befehl einen Konfigurationsinformationsänderungsanfragebefehl zum Anfragen zum Ändern von Konfigurationsinformationen, die durch die Cloud-Plattform verwaltet werden, enthält.

8. System nach Anspruch 1, wobei die KI-Verarbeitungseinheit (200) eine Lerneinheit (210) enthält, die ausgelegt ist, das Modell durch Maschinenlernen zu erzeugen.

9. System nach Anspruch 1 oder 8, wobei die KI-Verarbeitungseinheit (200) eine Bestimmungseinheit (240) enthält, die ausgelegt ist, den Zustand der Anlage unter Verwendung des Modells zu bestimmen.

10. Schnittstellenverfahren zur Verwendung in einem System, das eine erste Cloud-Plattform (50A), eine zweite Cloud-Plattform (50B) und eine KI-Verarbeitungseinheit (200), die ausgelegt ist, mindestens entweder eine Verarbeitung zum Erzeugen eines Modells zum Bestimmen eines Zustands einer Anlage durch Maschinenlernen oder eine Verarbeitung zum Bestimmen des Zustands der Anlage unter Verwendung des Modells auszuführen, enthält, wobei das Verfahren aufweist:
Empfangen, von der KI-Verarbeitungseinheit (200), eines ersten Befehls entsprechend einem Protokoll einer gemeinsamen Form, die mehreren Cloud-Plattformen gemeinsam ist, die jeweils unterschiedliche Spezifikationen aufweisen und die ausgelegt sind, die Anlage zu verwalten; und
Umwandeln des ersten Befehls in einen zweiten Befehl entsprechend einem Protokoll einer Form, die zu einer Schnittstelle korrespondiert, die durch eine Cloud-Plattform bereitgestellt wird, und Übertragen des zweiten Befehls an die Cloud-Plattform, wobei
das Umwandeln enthält:
Umwandeln, durch eine erste spezielle Cloud-Kommunikationseinheit (120A), die zu der ersten Cloud-Plattform (50A) korrespondiert, des ersten Befehls in den zweiten Befehl unter Verwendung eines Protokolls einer ersten Form, die zu einer ersten Schnittstelle korrespondiert, die durch die erste Cloud-Plattform (50A) bereitgestellt wird, und Übertragen des zweiten Befehls unter Verwendung des Protokolls der ersten Form an die erste Cloud-Plattform (50A), und
Umwandeln, durch eine zweite spezielle Cloud-Kommunikationseinheit (120B), die zu der zweiten Cloud-Plattform (50B) korrespondiert, des ersten Befehls in den zweiten Befehl unter Verwendung eines Protokolls einer zweiten Form, die zu einer zweiten Schnittstelle korrespondiert, die durch die zweite Cloud-Plattform (50B) bereitgestellt wird, und Übertragen des zweiten Befehls unter Verwendung des Protokolls der zweiten Form an die zweite Cloud-Plattform (50B).

11. Schnittstellenprogramm, das, wenn es von einem Computer in einem System ausgeführt wird, das eine erste Cloud-Plattform (50A), eine zweite Cloud-Plattform (50B) und eine KI-Verarbeitungseinheit (200), die ausgelegt ist, mindestens entweder eine Verarbeitung zum Erzeugen eines Modells zum Bestimmen eines Zustands einer Anlage durch Maschinenlernen oder eine Verarbeitung zum Bestimmen des Zustands der Anlage unter Verwendung des Modells auszuführen, aufweist, bewirkt, dass der Computer fungiert als:
eine Schnittstelleneinheit (110), die ausgelegt ist, von der KI-Verarbeitungseinheit (200) einen ersten Befehl entsprechend einem Protokoll einer gemeinsamen Form zu empfangen, die mehreren Cloud-Plattformen gemeinsam ist, die jeweils unterschiedliche Spezifikationen aufweisen und die ausgelegt sind, die Anlage zu verwalten;
eine Cloud-Kommunikationseinheit (120), die ausgelegt ist, den ersten Befehl in einen zweiten Befehl entsprechend einem Protokoll einer Form umzuwandeln, die zu einer Schnittstelle korrespondiert, die durch eine Cloud-Plattform bereitgestellt wird, und den zweiten Befehl an die Cloud-Plattform zu übertragen; und
die KI-Verarbeitungseinheit (200), wobei
die Cloud-Kommunikationseinheit (120) enthält:
eine erste spezielle Cloud-Kommunikationseinheit (120A), die zu der ersten Cloud-Plattform (50A) korrespondiert und ausgelegt ist, den ersten Befehl in den zweiten Befehl unter Verwendung eines Protokolls einer ersten Form umzuwandeln, die zu einer ersten Schnittstelle korrespondiert, die durch die erste Cloud-Plattform (50B) bereitgestellt wird, und den zweiten Befehl unter Verwendung des Protokolls der ersten Form an die erste Cloud-Plattform (50A) zu übertragen, und
eine zweite spezielle Cloud-Kommunikationseinheit (120B), die zu der zweiten Cloud-Plattform (50B) korrespondiert und ausgelegt ist, den ersten Befehl in den zweiten Befehl unter Verwendung eines Protokolls einer zweiten Form umzuwandeln, die zu einer zweiten Schnittstelle korrespondiert, die durch die zweite Cloud-Plattform (50B) bereitgestellt wird, und den zweiten Befehl unter Verwendung des Protokolls der zweiten Form an die zweite Cloud-Plattform zu übertragen.

12. Computerlesbares Aufzeichnungsmedium, das das Programm nach Anspruch 11 speichert.

## Revendications

1. Système comprenant :
une première plateforme infonuagique (50A) ;
une seconde plateforme infonuagique (50B) ;
**caractérisé en ce que** le système comprend en outre un appareil d'interface (100) comprenant :
une unité de traitement par IA (200) configurée pour exécuter au moins soit un traitement de génération d'un modèle pour déterminer un état d'une installation par apprentissage automatique, soit un traitement de détermination de l'état de l'installation à l'aide du modèle ;
une unité interface (110) configurée pour recevoir, en provenance de l'unité de traitement par IA (200), une première instruction selon un protocole d'une forme commune qui est commune à une pluralité de plateformes infonuagiques présentant respectivement des spécifications différentes et étant configurées pour gérer l'installation ; et
une unité de communication infonuagique (120) configurée pour convertir la première instruction en une deuxième instruction selon un protocole d'une forme correspondant à une interface fournie par une plateforme infonuagique et transmettre la deuxième instruction à la plateforme infonuagique ; dans lequel
l'unité de communication infonuagique (120) inclut
une première unité de communication infonuagique spécifique (120A) correspondant à la première plateforme infonuagique (50A) et configurée pour convertir la première instruction en la deuxième instruction à l'aide d'un protocole d'une première forme correspondant à une première interface fournie par la première plateforme infonuagique (50A), et transmettre la deuxième instruction à l'aide du protocole de la première forme à la première plateforme infonuagique (50A), et
une seconde unité de communication infonuagique spécifique (120B) correspondant à la seconde plateforme infonuagique (50B) et configurée pour convertir la première instruction en la deuxième instruction à l'aide d'un protocole d'une seconde forme correspondant à une seconde interface fournie par la seconde plateforme infonuagique (50B), et transmettre la deuxième instruction à l'aide du protocole de la seconde forme à la seconde plateforme infonuagique (50B).

2. Système selon la revendication 1, dans lequel :
l'unité de communication infonuagique (120) est configurée pour recevoir une troisième instruction à l'aide du protocole de la forme provenant de la plateforme infonuagique et convertir la troisième instruction en une quatrième instruction à l'aide du protocole de la forme commune ; et
l'unité interface (110) est configurée pour transmettre la quatrième instruction à l'unité de traitement par IA (200).

3. Système selon la revendication 1 ou 2, dans lequel la première instruction inclut une instruction de demande d'acquisition de liste de capteurs pour demander l'acquisition d'une liste de capteurs présents dans l'installation gérée par la plateforme infonuagique.

4. Système selon l'une quelconque des revendications 1 à 3, dans lequel la première instruction inclut une instruction de demande d'acquisition de données de capteur pour demander l'acquisition de données de mesure d'un capteur présent dans l'installation gérée par la plateforme infonuagique.

5. Système selon l'une quelconque des revendications 1 à 4, dans lequel la première instruction inclut une instruction de demande d'écriture de résultat de détermination pour demander l'écriture d'un résultat de détermination obtenu en déterminant l'état de l'installation dans une base de données de la plateforme infonuagique.

6. Système selon l'une quelconque des revendications 1 à 5, dans lequel la première instruction inclut une instruction de demande de changement d'informations de modèle pour demander le changement d'informations du modèle géré par la plateforme infonuagique.

7. Système selon l'une quelconque des revendications 1 à 6, dans lequel la première instruction inclut une instruction de demande de changement d'informations de configuration pour demander le changement d'informations de configuration gérées par la plateforme infonuagique.

8. Système selon la revendication 1, dans lequel l'unité de traitement par IA (200) inclut une unité d'apprentissage (210) configurée pour générer le modèle par apprentissage automatique.

9. Système selon la revendication 1 ou 8, dans lequel l'unité de traitement par IA (200) inclut une unité de détermination (240) configurée pour déterminer l'état de l'installation à l'aide du modèle.

10. Procédé d'interface destiné à être utilisé dans un système présentant une première plateforme infonuagique (50A), une seconde plateforme infonuagique (50B) et une unité de traitement par IA (200) configurée pour exécuter au moins soit un traitement de génération d'un modèle pour déterminer un état d'une installation par apprentissage automatique, soit un traitement de détermination de l'état de l'installation à l'aide du modèle, le procédé comprenant :
la réception, en provenance de l'unité de traitement par IA (200), d'une première instruction selon un protocole d'une forme commune qui est commune à une pluralité de plateformes infonuagiques présentant respectivement des spécifications différentes et étant configurées pour gérer l'installation ; et
la conversion de la première instruction en une deuxième instruction selon un protocole d'une forme correspondant à une interface fournie par une plateforme infonuagique et la transmission de la deuxième instruction à la plateforme infonuagique, dans lequel
la conversion inclut
la conversion, par une première unité de communication infonuagique spécifique (120A) correspondant à la première plateforme infonuagique (50A), de la première instruction en la deuxième instruction à l'aide d'un protocole d'une première forme correspondant à une première interface fournie par la première plateforme infonuagique (50A), et la transmission de la deuxième instruction à l'aide du protocole de la première forme à la première plateforme infonuagique (50A), et
la conversion, par une seconde unité de communication infonuagique spécifique (120B) correspondant à la seconde plateforme infonuagique (50B), de la première instruction en la deuxième instruction à l'aide d'un protocole d'une seconde forme correspondant à une seconde interface fournie par la seconde plateforme infonuagique (50B), et la transmission de la deuxième instruction à l'aide du protocole de la seconde forme à la seconde plateforme infonuagique (50B).

11. Programme d'interface qui, lorsqu'il est exécuté par un ordinateur dans un système présentant une première plateforme infonuagique (50A), une seconde plateforme infonuagique (50B) et une unité de traitement par IA (200) configurée pour exécuter au moins soit un traitement de génération d'un modèle pour déterminer un état d'une installation par apprentissage automatique, soit un traitement de détermination de l'état de l'installation à l'aide du modèle, amène l'ordinateur à fonctionner en tant que :
unité interface (110) configurée pour recevoir, en provenance de l'unité de traitement par IA (200), une première instruction selon un protocole d'une forme commune qui est commune à une pluralité de plateformes infonuagiques présentant respectivement des spécifications différentes et étant configurées pour gérer l'installation ;
unité de communication infonuagique (120) configurée pour convertir la première instruction en une deuxième instruction selon un protocole d'une forme correspondant à une interface fournie par une plateforme infonuagique et transmettre la deuxième instruction à la plateforme infonuagique ; et
unité de traitement par IA (200), dans lequel
l'unité de communication infonuagique (120) inclut
une première unité de communication infonuagique spécifique (120A) correspondant à la première plateforme infonuagique (50A) et configurée pour convertir la première instruction en la deuxième instruction à l'aide d'un protocole d'une première forme correspondant à une première interface fournie par la première plateforme infonuagique (50B), et transmettre la deuxième instruction à l'aide du protocole de la première forme à la première plateforme infonuagique (50A), et
une seconde unité de communication infonuagique spécifique (120B) correspondant à la seconde plateforme infonuagique (50B) et configurée pour convertir la première instruction en la deuxième instruction à l'aide d'un protocole d'une seconde forme correspondant à une seconde interface fournie par la seconde plateforme infonuagique (50B), et transmettre la deuxième instruction à l'aide du protocole de la seconde forme à la seconde plateforme infonuagique.

12. Support d'enregistrement lisible par ordinateur stockant le programme selon la revendication 11.
